# EUROPEAN PATENT APPLICATION

(11) **EP 1 501 244 A2**
(43) Date of publication of application: **26.01.2005**
(21) Application number: 04254224.1
(22) Date of filing: 14.07.2004
(51) Int. Cl.: H04L 12/56

(54) **Method and apparatus for Bluetooth communication**

(30) Priority: 22.07.2003 GB 0317130
(71) Applicant: Mansella Limited, Aldershot, Hampshire GU11 1BA (GB)
(72) Inventor: Dewan, Abdul Wahed, Harrow Middlesex HA2 9TB (GB); Goodings, Chris, Portskewett Monmouthshire NP26 5SH (GB); Barrett, Mark, Horsham West Sussex RH13 6RH (GB)
(74) Representative: Williams, Michael Ian

(57) **Abstract**

Bluetooth communication apparatus is disclosed comprising a plurality of antennas (1), signal strength monitoring means (11) for monitoring signal strength seen at each antenna, selection means (8) for selecting one of the plurality of antennas (1) for use in receiving or transmitting a respective data packet, and control means (11) for controlling the selection means (8) in dependence on the monitored signal strength.

## Description

This invention relates to Bluetooth communication apparatus and methods of Bluetooth communication.

Bluetooth communication is widely used as a standard for wireless communication between different units over relatively short distances. It can, for example, be used for communication between a mobile telephone and a laptop or another portable computer. It may also be used in cordless telephone systems where there is a handset which must communicate with a base station.

The Bluetooth standard makes use of a fast frequency hopping TDMA (Time Division Multiple Access) radio. The link master transmits a burst of information at a given frequency contained in a time slot of 625µs. This burst contains a short four bit preamble, a synchronisation word (to identify the intended recipient) and payload data. The intended recipient (slave) will then respond in the following 625µs at a different frequency. The master may subsequently transmit to the same slave device or a different slave device and this may occur immediately or after some delay. In any case the subsequent transmissions will be at a different hop frequency. The frequencies are chosen in a pseudo random way from 79 possible frequencies.

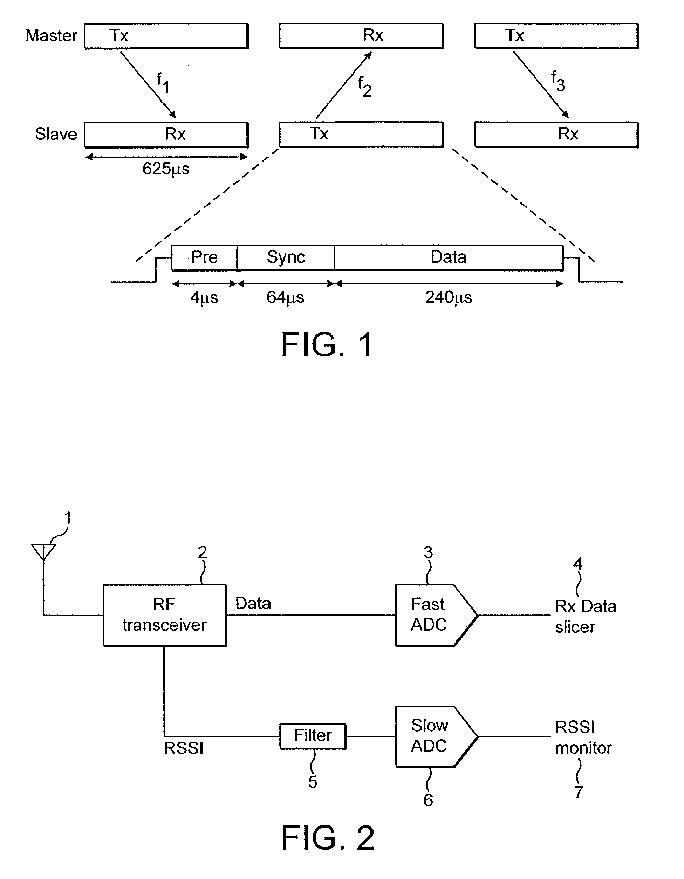

This protocol is schematically shown in Figure 1 for a single slot packet type. There are also so-called multi slot packets which will last longer than 625µs but the use of such packets has no significant effect on the ideas contained in the present application.

As part of the transmission process in Bluetooth, before each data packet is sent, the radio frequency carrier is transmitted for a short period. This short period is sometimes designated as a guard time. The Bluetooth standard calls for a minimum 5µs guard time and in general Bluetooth systems will incorporate a guard time of 5µs.

Figure 2 schematically shows a typical conventional receive module of a Bluetooth enabled device. The module comprises an antenna 1 connected to a radio frequency (RF) transceiver 2. The RF transceiver 2 has two outputs, the first of which is a data output and the second of which is a radio signal strength indicator (RSSI) output. The data output is connected to a fast ADC (analogue to digital converter) 3 and the output of the fast ADC 3 is fed into a receive data slicer 4 to process the received data signals. The RSSI output of the RF transceiver 2 is connected via a low pass filter 5 to a slow ADC 6 and the output of this slow ADC 6 is connected to an RSSI monitor module which is used for controlling the power of subsequent transmissions based on the signal strength received. Although not shown in Figure 2, the RF transceiver 2 also forms part of a transmission module and is arranged to receive modulated data for transmission through the antenna 1 to give two way communication.

As alluded to above, Bluetooth may be used in systems for transferring voice or music signals and in such a case, the integrity of the link is particularly important. This is because, any loss of data over the transmission path will be immediately perceived by the user as an audible artefact.

One of the problems which can occur when using Bluetooth devices is multi-path fading. In the type of indoor environments in which Bluetooth devices are commonly used the presence of walls and other objects within rooms make multi-path fading particularly likely. Such multi-path effects can result in deep fades in the radio channel.

The use of antenna diversity, that is the provision of more than one antenna which may be selectively or additively used, is known for counteracting the effect of multi-path fading. However, the Bluetooth standard does not by default allow for the use of antenna diversity and there are several technical challenges to be overcome if antenna diversity is to be used.

It is an aim of the present invention to provide for antenna diversity in Bluetooth communication.

According to one aspect of the present invention there is provided Bluetooth communication apparatus comprising a plurality of antennas, signal strength monitoring means for monitoring signal strength seen at each antenna, selection means for selecting one of the plurality of antennas for use in receiving or transmitting a respective data packet and control means for controlling the selection means in dependence on the monitored signal strength.

According to another aspect of the invention there is provided a method of Bluetooth communication using apparatus comprising a plurality of antennas and comprising the steps of:
monitoring signal strength seen at each antenna; and
selecting one of the plurality of antennas for use in receiving or transmitting a respective data packet in dependence on the monitored signal strength.

Typically there will be two antennas between which a selection needs to be made.

In Bluetooth communications single data packets are transmitted within time slots and there are time intervals between the end of one packet and the start of the next. For the majority of time between these packets there is no signal. However, the Bluetooth standard calls for there to be a minimum of 5µs before the beginning of each data packet where the radio frequency carrier signal is sent plain, that is, carrying no data. This period where the carrier alone is transmitted can be termed a guard time.

The signal strength monitoring means may be arranged to monitor the signal strength of the radio frequency carrier signal when no data packet is being carried.

The signal strength monitoring step may comprise the step of monitoring the signal strength of the radio frequency carrier signal when no data packet is being carried.

The antenna for use in receiving a particular packet may be selected on the basis of the signal strength seen at the antennas in the period immediately preceding the reception of that packet.

Here the expression immediately preceding is used to mean that there is no intervening data packet or such like and should not be taken to mean that there needs to be a vanishingly small time interval between the signal strength measurement and the packet. In practice however due to the timing structure in Bluetooth there is likely to be a very short time interval between signal strength sensing and packet reception.

Preferably the signalling regime is arranged so that the guard time is selected to be long enough for the monitoring and selection operations to be completed. Preferably the guard time is greater than 5µs. The guard time may be in the range of 20µs to 40µs. A guard time of in the order of 30us is currently preferred.

The control means may be arranged to select the antenna seeing the greatest signal strength. The selecting step may comprise the step of selecting the antenna seeing the greatest signal strength.

The control means may comprise the monitoring means.

The method may comprise the step of using a common analogue to digital convertor (ADC) for converting the radio frequency carrier signal during the signal strength monitoring step and for converting the data packet in the extraction of data. The method may comprise the step of time multiplexing the carrier signals and data signals fed to the ADC.

The control means may comprise a common analogue to digital convertor (ADC) for converting the radio frequency carrier signal during signal strength monitoring and for converting the data packet in the extraction of data. The control means may comprise a multiplexer for time multiplexing the carrier signals and data signals fed to the ADC.

The control means may comprise an RF receiver or transceiver for receiving the Bluetooth signal and having two outputs, the first output being used to output received data packet signals and the second being used to output a received signal strength indicator signal. These two outputs may be fed to the multiplexer.

In an alternative the RF receiver or transceiver may comprise the common ADC and may comprise the multiplexer.

This technique may be used because the signal strength measurements taken for antenna selection occur during a period where there is no data signal and brings advantages because a "fast" ADC will generally be provided in a Bluetooth reception module to convert the data signals. Components are saved and fast decision making enabled by using this fast ADC during times at which it would otherwise be inactive.

A separate "slow" ADC will often be provided for converting the signal strength indicator signal for power control reasons. Whilst this ADC could in theory be used in antenna selection there are likely to be problems with completing the selection process in the time available because of the slower conversion speed. The RF receiver or transceiver may comprise the "slow" ADC, this may be in addition to comprising the "fast" ADC and/or the multiplexer.

The control means may be arranged to follow an auxiliary selection process under predetermined conditions. The method may include using an auxiliary selection process under predetermined conditions.

The control means may be arranged to follow an auxiliary selection process to select an antenna for packet transmission. The method may comprise the step of using an auxiliary selection process to select an antenna for packet transmission.

The control means may hold a signal strength threshold, and be arranged such that if the signal strength seen by each of the antennas is below this threshold the results of an auxiliary selection process are used in the selection of the antenna for the current packet. The method may comprise the step of, where the signal strength seen at each of the antennas is below a threshold value, using the results of an auxiliary selection process in the selection of the antenna for the current packet.

In alternatives an auxiliary selection process may be used to assist in antenna selection regardless of the signal strength seen.

The auxiliary selection process may comprise the step of selecting a default antenna.

The auxiliary selection process may comprise the step of selecting the antenna used for one of: the previous packet, the previous packet received and the previous packet transmitted.

The auxiliary selection process may comprise the steps of selecting an antenna which was not used for one of: the previous packet, the previous packet received and the previous packet transmitted - where there are two antennas this can lead to a toggling between antennas when the auxiliary selection process is used.

The auxiliary selection process may comprise the steps of monitoring the frequency of, and which antenna is used for, one of: each packet, each packet sent, and each packet received; storing the identity of the antenna used for the monitored packets in association with the frequency of the monitored packets in such a way as to provide a log indicating the identity of the antenna most recently monitored in use for a packet having each transmission frequency; and where the log contains an appropriate entry, selecting, for the present packet, the antenna shown by the log to have most recently been used by a packet having the same transmission frequency as the present packet.

The auxiliary selection process may comprise the steps of monitoring the frequency of, and which antenna is used for, one of: each packet, each packet sent, and each packet received; storing the identity of the antenna used for the monitored packets in association with the frequency of the monitored packets in such a way as to provide a log having a predetermined maximum number of entries, which number is less than the number of different transmission frequencies used; and selecting, for the present packet, the antenna shown by the log to have been used by a packet having a transmission frequency which is closest to the transmission frequency of the present packet.

The storing step may be conducted so that the log contains entries in respect of the most recently monitored packets, irrespective of their transmission frequency.

The storing step may be conducted so that the log contains only one entry in respect of any transmission frequency and may further be conducted so that the log contains entries corresponding to the most recently monitored packets having mutually unique transmission frequencies.

The predetermined maximum number of entries may be chosen to be between 10 and 30. It is preferred if the predetermined maximum number of entries is between 15 and 25 and having the predetermined maximum number of entries set at 20 is most preferred.

The control means may be arranged to carry out any one of, or any combination of the above auxiliary selection processes.

The method may include the step of selecting an antenna for transmission by using the same antenna as was used to receive the immediately preceding packet.

The method may include the step of selecting an antenna for transmission by using the same antenna as was used to receive the last packet received having the same transmission frequency.

The method may comprise the step of selecting an antenna for transmission by monitoring the frequency of, and which antenna is used for, each packet received; storing the identity of the antenna used for the monitored packets in association with the frequency of the monitored packets in such a way as to provide a log having a predetermined maximum number of entries, which number is less than the number of different transmission frequencies used; and selecting, for the present packet, the antenna shown by the log to have been used for receiving a packet having a transmission frequency which is closest to the transmission frequency of the present packet.

The storing step may be conducted so that the log contains entries in respect of the most recently monitored packets, irrespective of their transmission frequency. It has been found that this will produce particularly effective results and is a relatively simple scheme making it cheap and easy to implement.

The predetermined maximum number of entries may be chosen to be between 10 and 30. It is preferred if the predetermined maximum number of entries is between 15 and 25 and having the predetermined maximum number of entries set at 20 is most preferred.

The control means may be arranged to carry out the above steps for selecting an antenna for transmission.

In some embodiments the control means comprises a control unit, a receiver or transceiver, a multiplexer, and a fast ADC.

The present methods and apparatus may be used at both ends of a communication link so that there is antenna diversity at both ends of the link, or used at one end of the link. Similarly the present methods and apparatus may be used for selecting antennas for reception, for transmission or for both.

It is currently preferred to provide antenna diversity at only one end of the link. In such a case it is also preferred to select antennas for both reception and transmission of signals. In many implementations of interest there will be a base station and a portable unit, with communication between these two such that one end of the link is at the base station and the other end of the link is at the portable unit. It is preferred if antenna diversity is provided at the base station and more preferable still to provide both receive and transmit antenna diversity at the base station. By contrast, to minimise production costs, it is preferred if no antenna diversity is provided at the portable unit.

According to a further aspect of the invention there is provided Bluetooth communication apparatus comprising a pair of antennas, a switch for selecting one of the pair of antennas for use in receiving a respective data packet, and a control module for monitoring signal strength seen at each antenna during a guard time before the respective data packet and for controlling the switch to select one of the antennas in dependence on the monitored signal strength.

According to a further aspect of the invention there is provided a Bluetooth communication base station comprising a pair of antennas, a switch for selecting one of the pair of antennas for use in receiving a respective data packet, and a control module for monitoring signal strength seen at each antenna during a guard time before the respective data packet and for controlling the switch to select one of the antennas in dependence on the monitored signal strength.

According to a further aspect of the invention there is provided a Bluetooth communication base station comprising a pair of antennas, a switch for selecting one of the pair of antennas for use in receiving a respective data packet, and a control module for monitoring signal strength seen at each antenna during a guard time before the respective data packet and for controlling the switch to select one of the antennas in dependence on the monitored signal strength, wherein the control module comprises a common analogue to digital convertor (ADC) for converting a radio frequency carrier signal during the guard time and for converting the data packet during the extraction of data.

Many of the features defined above may be implemented in hardware, firmware or software depending on design choice.

According to another aspect of the present invention there is provided a computer program comprising code portions which when loaded and run on a computer cause the computer to execute any one of, or any part of one of, the methods described above.

The program may be carried on a data carrier. The data carrier may be a signal or a record medium, for example a floppy disc, a hard disc, CD-Rom, DVD-Rom.

The expression computer should be considered broadly and covers, for example, an embedded processor provided in a communications unit, for example, a base station.

Embodiments of the present invention will now be described by way of example only with reference to the accompanying drawings in which:
Figure 1 schematically shows the Bluetooth radio hop protocol for single slot packets;
Figure 2 schematically shows a conventional Bluetooth radio receiver module;
Figure 3 schematically shows a Bluetooth communication system embodying the present invention;
Figure 4 schematically shows a Bluetooth receiver module embodying the present invention and forming part of a base station in the communication system shown in Figure 3;
Figure 5 is a timing chart illustrating the operation of the Bluetooth receiver module shown in Figure 4; and
Figure 6 is a timing diagram showing the output of the fast ADC 3.

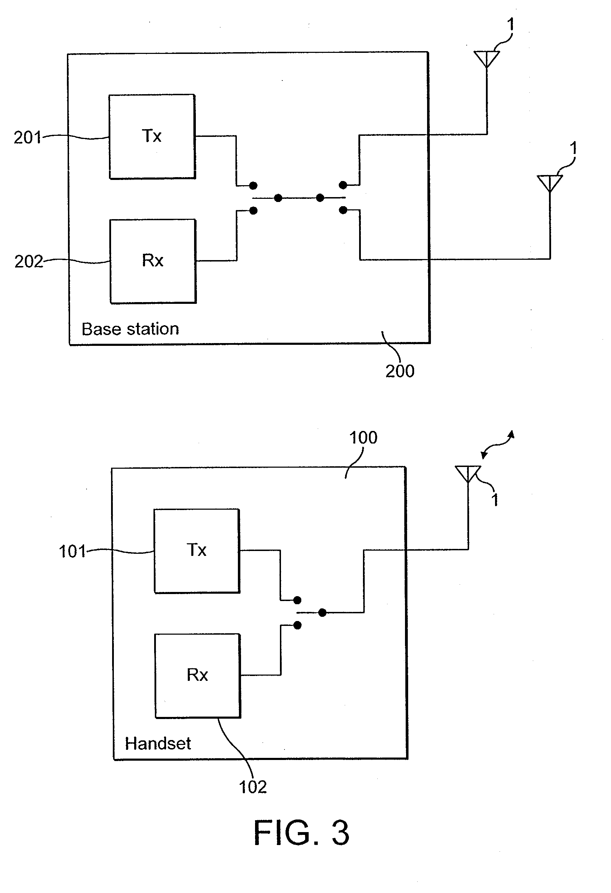

Figure 3 schematically shows a Bluetooth communication system embodying the present invention and comprising a cordless phone handset 100 and a cordless phone base station 200. The cordless phone handset 100 comprises an antenna 1 which is connected to a Bluetooth transmitter 101 and a Bluetooth receiver 102 to allow the transmission and reception of Bluetooth signals at the handset 100.

The cordless phone base station 200 comprises a pair of antennas 1 each of which is selectively connectable to a Bluetooth transmitter 201 and a Bluetooth receiver 202 to allow the reception of, and transmission of, Bluetooth signals at the base station 200.

More detail of the structure and operation of various aspects of the communication system will be given below, but the following introductory comments will be helpful at this stage.

In the present embodiment antenna diversity is provided at the base station 200 but not at the handset 100. This arrangement is preferred since providing antenna diversity at the handset 100 has cost implications and size implications for the handset and, furthermore, in many situations the provision of antenna diversity at the base station 200 will provide a satisfactory improvement in communication.

It should also be noted that the base station 200 is arranged to provide antenna diversity during both the reception and transmission of signals at the base station. Therefore, there is an opportunity to minimise the effect of multi-path fading etc, during communication in both directions between the handset 100 and the base station 200 even though the handset 100 has a single antenna 1.

At a general level, the present technique for providing antenna diversity in a Bluetooth system can be specified as follows.

The strength of signals seen at each antenna 1 at the base station 200 during reception of the carrier signal alone during a guard time preceding the receipt of a data packet is compared and, provided that a predetermined threshold is exceeded, the antenna 1 which sees the greatest signal strength during this guard time is selected for receiving the upcoming packet. If the signal strength seen at both of the antennas falls below the predetermined threshold then an auxiliary selection method is used to choose the antenna 1 for reception. There are various sorts of auxiliary selection methods that may be used but the majority of these rely on historic data concerning the reception of previous packets. Similar auxiliary selection techniques are also used for selecting the antenna for transmission as will be explained in more detail below.

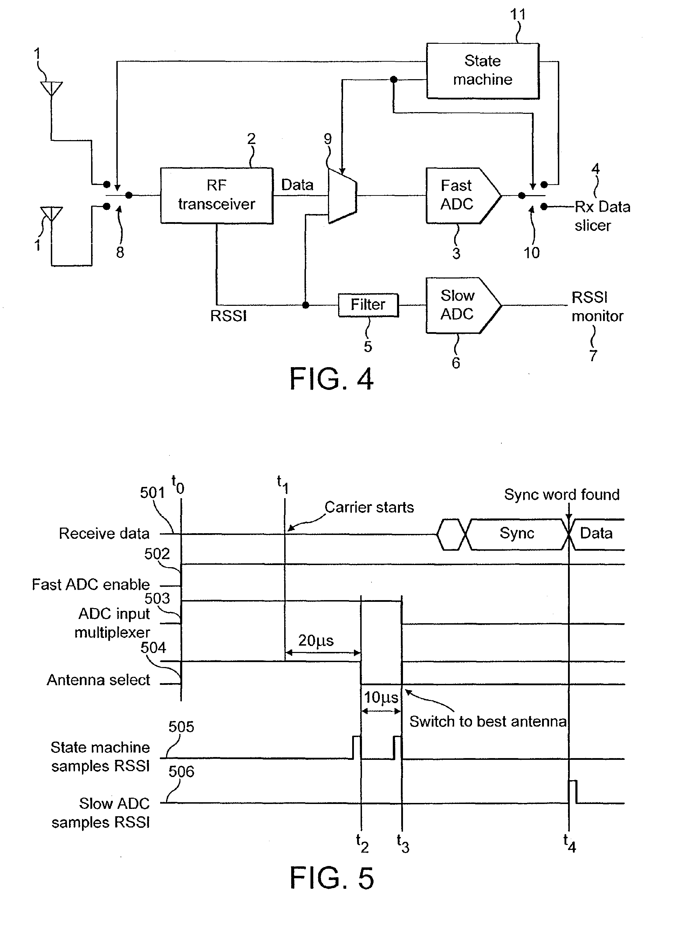

The structure and operation of the antenna diversity aspects of the base station 200 will be described in more detail below with particular reference to Figures 4 and 5.

Figures 4 and 5 concentrate on the functionality of the system during reception of signals at the base station 200 since these form the foundation of the antenna selection techniques. The auxiliary selection techniques which are used in some circumstances for selection during reception and are used for selection during transmission will be described further below.

Figure 4 schematically shows a Bluetooth receiver module which may be used to provide antenna diversity in a Bluetooth communication system.

In contrast to the conventional receiver module shown in Figure 2, in the present module there are a pair of antennas 1 each of which is selectively connectable to an RF transceiver 2 by operation of a switch 8. The RF transceiver 2 can be substantially the same as in a conventional system and has a data output and an RSSI output. The RSSI output of the RF transceiver 2 is connected via a low pass filter 5 to a slow ADC 6 and onto a RSSI monitor 7 in the same way as in the conventional receiver module.

However, the data output of the RF transceiver 2 is connected to a multiplexer 9 and the RSSI output of the RF transceiver 2 is also connected to the multiplexer 9. The output of the multiplexer 9 is fed into a fast ADC 3 and the multiplexer 9 allows the data output and RSSI output of the RF transceiver 2 to be selectively input into the fast ADC 3. The output of the fast ADC 3 is fed into a respective switch 10.

A control unit (or state machine) 11 is provided to control the antenna switch 8, the multiplexer 9 and the fast ADC output switch 10. The fast ADC output switch 10 is arranged to selectively connect the output of the fast ADC 3 to a receive data slicer 4 to allow the extraction of data and to an input of the control unit 11 to allow the control unit 11 to monitor the output of the fast ADC 3.

At a basic level the operation of the receive module is as follows.

The carrier signal during the extended guard time is received for a certain period by one of the antennas and for the remainder of the period by the other of the antennas 1. During this period the multiplexer 9 feeds the RSSI output of the RF transceiver 2 to the fast ADC 3, and the ADC output switch 10 is switched so that the output of the fast ADC 3 is received by the control unit 11. This means that the control unit 11 can detect the signal strength seen at each antenna and select one of the antennas for reception on the basis of these results. Once an antenna has been selected, the antenna selection switch 8 may be switched to allow reception of the respective data packet by the correct antenna 1. At this stage the multiplexer 9 is changed in state and the fast ADC 3 output switch 10 is switched so that the output of the ADC 3 is connected to the received data slicer 4 and the data packet is received along a path comprising the selected antenna 1, the RF transceiver 2, the multiplexer 9, the fast ADC 3 and the data slicer 4.

Throughout this operation the RSSI output of the RF transceiver 2 is fed through the low pass filter 5 and the slow ADC 6 and onto the RSSI monitor 7 to allow conventional power control functions to be carried out. The low pass filter 5 prevents the effects of the antenna switching from causing significant error in the RSSI value measured by the slow ADC 6 for power control.

A more detailed description of this process is given below with reference to the timing chart shown in Figure 5. The timing chart shows received data activity 501, enablement 502 of the fast ADC 3, the state 503 of the ADC input multiplexer 9, the state 504 of the antenna selection switch 8, sampling 505 of the RSSI signal by the control unit 11 and sampling 506 of the RSSI signal by the RSSI monitor 7 having been processed by the slow ADC 6.

At a time to, well before a data packet is received and before the RF carrier begins transmission, the fast ADC 3 is enabled and the multiplexer 9 is set so that any RSSI signal will be fed to the fast ADC 3. At the same time, the antenna selection switch 8 is switched (if necessary) so that an antenna chosen as the default antenna is connected to the transceiver 2. Although not shown in Figure 5 the fast ADC output switch 10 is also set, at time t₀, so that the output of the fast ADC 3 is connected to the input of the control unit 11. The time to at which these switching and enablement actions take place may be at any time after the completion of transmission of the preceding packet.

At some time t₁ after these initiation steps, the RF carrier signal associated with the upcoming packet will begin. At this time the RF signal will be received by the default antenna 1 and the RSSI signal from the transceiver 2 will be fed through the multiplexer 9, the fast ADC 3 and onto the control unit 11.

The antenna selection switch 8 is kept in this initial state for a predetermined period (20µs in this embodiment) until time t₂, when the state of the switch 8 is changed so that the other antenna is used for reception of the carrier signal. Further, as shown in Figure 5, in the period running up to the change of the state of the switch 8, the control unit 11 samples the signal strength received via the first default antenna.

The antenna selection switch 8 is maintained in its second state so that the second antenna 1 is receiving the signal for a predetermined period until time t₃, when a decision must be made as to which antenna to use for reception of the data stream. Again, immediately before this decision making time t₃ the control unit 11 samples the strength of signal seen via the second antenna and using the results of these two sampling processes the control unit makes a decision as to which antenna to use and the switch 8 is either left in position so that the second antenna is used or switched back so that the default antenna is used.

When the control unit 11 has finished its decision making process and changed the antenna selection switch 8 to the correct state, the control unit 11 also changes the state of the multiplexer 9 so that the data output from the RF transceiver 2 is fed through to the fast ADC 3 and furthermore, the control unit 11 changes the state of the fast ADC output switch 10 so that the output of the fast ADC 3 is fed to the received data slicer 4.

At some time after the completion of this operation, the data stream will start. First of all the preamble and sync parts of the packet are received and once the sync word has been found, at time t₄, the slow ADC 6 is ready to sample the RSSI signal for power control.

It will be noted that in this way, the fast ADC 3 is both for processing the signal strength information during the antenna selection process and for processing the Bluetooth data signals. This means that fast processing and decision making can be made in respect of the antenna selection without the need to introduce an additional fast ADC with the associated cost and power supply implications. This technique works particularly well in the present system because the fast ADC 3 is being used to process the signal strength signals at a time at which it would otherwise be idle. It will also be noted that the slow ADC 6 would not be able to process the signal strength signals fast enough to allow an antenna to be selected during the guard time even though this has been extended to something in the order of 30µ in this embodiment.

The above description relates to the selection of an antenna for use in receiving a Bluetooth data packet. However, of course, the base station 200 is also used for transmitting and, in the present embodiment, antenna diversity is also provided for transmission. In transmission, the control unit 11 controls the antenna selection switch 8 to apply signals generated by the RF transceiver 2 under the control of a transmission module (not shown) to the desired antenna 1. Various different mechanisms may be used in selecting an antenna for transmission in a system of the present type.

### Possibilities, which are not used in the present embodiment, include:

Previous hop - This consists of using the same antenna to transmit the packet as was just used to receive the previous packet. Whilst this is perhaps a workable solution, this antenna may not be the correct choice, since the transmit hop frequency will normally be different to the received hop frequency and therefore the multi path fading effects and other impairments in the signal channel may be very different for the packet to be transmitted compared with that just received.

Previous hop at the same frequency - In such a technique a record of the last antenna to be used for each received hop frequency is maintained by the control unit 11. Then an assumption is made that the best antenna for transmitting a packet of a given frequency will be the same as that most recently used for receiving a packet of the same frequency. In this way, when a packet is to be transmitted, the control unit 11 can consult the table of hop frequencies and operate the antenna selection switch 8 to select the appropriate antenna 1. This system would provide good results in a static system but may provide bad or patchy results if the handset 100 is being moved relative to the base station 200 such that the location at the time of transmission is significantly different from that at which a packet of the same frequency was last received.

In the present embodiment, an antenna is chosen for transmission using a technique which may be termed "closest frequency during last n hops". Here, as each packet is received, the control unit 11 keeps a record of the antenna used for the packet and the frequency of the packet in a log such that the log contains details of the last n receive slots. When the n + 1 packet is received, information concerning this packet will overwrite the information in the log with regard to the first packet. When an antenna for transmission is selected, the control unit 11 consults the log and chooses the antenna which is shown by the log to have been used to receive a packet having a frequency closest to the packet which is about to be transmitted. Because the log only retains information about the last n received packets, the decision is, of course, made only using information concerning the reception of the last n slots and this will typically be recent data. Therefore, the position of the handset is less likely to have moved significantly.

Whilst the value of n may be varied for different implementations, in the present embodiment n is set equal to 20 so that the control unit 11 keeps record of the last 20 received packets. It has been found by way of performing simulations that using this technique with n = 20 provides superior results to using either the "previous hop" or "previous hop at the same frequency" methods outlined above. Furthermore, since information about only 20 previous hops needs to be stored less storage space is required compared with the "previous hop at the same frequency" method described above where it would be necessary to store information in respect of 79 hops.

As mentioned above, during the selection of antennas for reception of data packets, a decision is primarily based on the monitored signal strength seen at each of the antennas 1. However, if the signal strength seen by each antenna is below a predetermined threshold then an auxiliary selection technique is used. At a simplest level the control unit 11 may select a default antenna if the signal strength seen by both antennas is below the threshold. Alternatively, the same antenna may be used for receiving the packet as was used for the previous received packet or indeed the previous transmitted packet. In another alternative the antenna which was not used for the previous transmission packet or was not used for the previous received packet may be selected so that there is a toggling between the antennas used for communication or a toggling of the antennas used for reception.

In yet another alternative where the control unit 11 is arranged to store details of the antenna last used for packets at each of the available frequencies, an antenna may be selected on the basis that it was used for the last hop of the same frequency. It will be appreciated that if such a record of the last antenna used for each frequency is maintained at the control unit 11, this may be used both for the selection of an antenna for transmission and for the selection of an antenna for reception if the received signal strength from the antennas both fall below the predetermined threshold.

In the present embodiment however, since as described above, the control unit 11 is used to maintain a log of the details of the last 20 receive hops for use in selecting an antenna for transmission, this log is also used for selecting an antenna for reception if the signal strength seen by the two antennas fall below the predetermined threshold. That is to say, when the signal strength seen by both antennas falls below the predetermined threshold, the antenna for reception is selected on the basis of that which is shown by the log to have been used for the reception of a signal having a frequency which is closest to that of the present packet.

In such a way it will be seen that the auxiliary selection technique used for selecting antennas for transmission may be the same as that used for selecting an antenna for reception when the signal strength received by the two antennas is below the predetermined threshold.

In an alternative, rather than using this auxiliary selection information, for reception, only when the signal strength seen by both antennas falls below the predetermined threshold, the "closest frequency during last n hops" technique may be used to provide information to the control unit 11 during all decision making processes. Thus, for example, there may be a hybrid decision making process where some account is taken of the signal strength seen by the antennas and some account is taken of which antenna was used in the last 20 receive hops for a packet having a similar frequency.

As mentioned above, the present system recognises the fact that whilst providing antenna diversity at both end of the links would provide the optimum communication channel there can be physical constraints and power and cost implications for using antenna diversity in, for example, a mobile handset. Because of this there is a significant advantage to be gained by providing transmit antenna diversity as well as receive antenna diversity at one end of the link, in this case at a base station.

Software useable to carry out the processes described above, for example the primary and auxiliary selection processes, may be carried on any suitable carrier and may, for example, be supplied to a manufacturer, or another, on a carrier for loading into the control unit of a transmit, receive or transceive module of a Bluetooth enabled device.

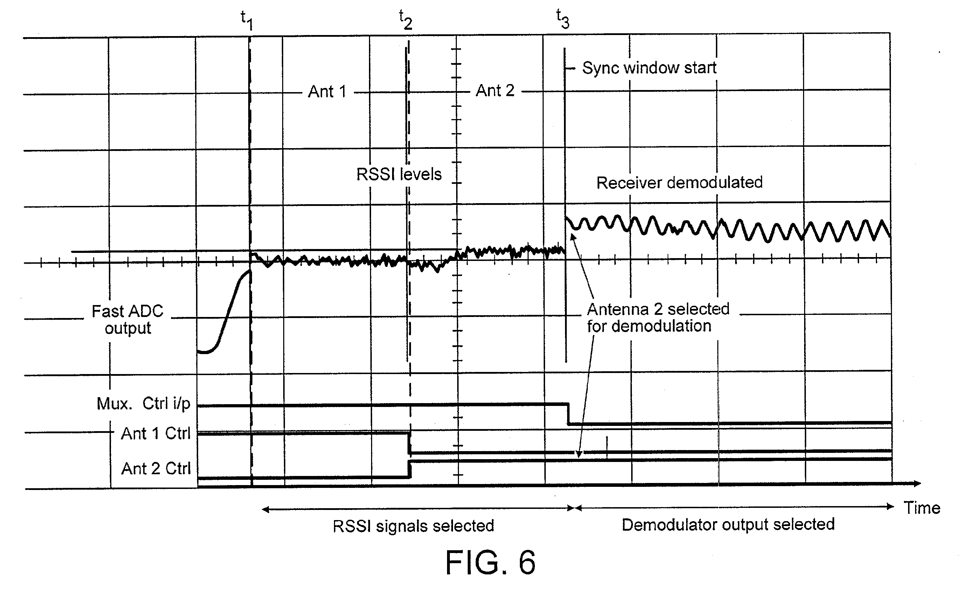

Figure 6 shows the output of the fast ADC 3, together with the control signal input to the multiplexer 9, and the control signals for the two antennas 1. Between time t₁ and t₂ the output of the fast ADC is the RSSI level of the first antenna. Between time t₂ and t₃ the output of the fast ADC is the RSSI level of the second antenna. At or shortly before time t₃ a decision is made as to which antenna has the best RSSI level. In the illustrated example antenna 2 has the best RSSI level. At time t₃ the switch 8 switches to the selected antenna, and the multiplexer 9 switches from the RSSI output of the RF transceiver to the data output of the RF transceiver. The output of the fast ADC is then the data output from the selected antenna.

## Claims

1. Bluetooth communication apparatus comprising a plurality of antennas, signal strength monitoring means for monitoring signal strength seen at each antenna, selection means for selecting one of the plurality of antennas for use in receiving or transmitting a respective data packet, and control means for controlling the selection means in dependence on the monitored signal strength.

2. Bluetooth communication apparatus according to claim 1 in which the signal strength monitoring means is arranged to monitor the signal strength of the radio frequency carrier signal when no data packet is being carried.

3. Bluetooth communication apparatus according to claim 2 which is arranged so that the antenna for use in receiving a particular packet is selected on the basis of the signal strength seen at the antennas in the period immediately preceding the reception of that packet.

4. Bluetooth communication apparatus according to claim 2 or claim 3 arranged for use with a signalling regime where the guard time is selected to be long enough for the monitoring and selection operations to be completed.

5. Bluetooth communication apparatus according to any one of claims 2 to 4 wherein the guard time is greater than 5µs.

6. Bluetooth communication apparatus according to any preceding claim in which the control means is arranged to select the antenna seeing the greatest signal strength.

7. Bluetooth communication apparatus according to any preceding claim in which the control means comprise the monitoring means.

8. Bluetooth communication apparatus according to any preceding claim in which the control means comprise a common analog to digital convertor (ADC) for converting the radio frequency carrier signal during signal strength monitoring and for converting the data packet in the extraction of data.

9. Bluetooth communication apparatus according to claim 8 in which the control means comprise a multiplexer for time multiplexing the carrier signals and data signals fed to the ADC.

10. Bluetooth communication apparatus according to claim 9, further comprising an RF transceiver having a data output and a signal quality indicator output, wherein the control means is arranged to feed the signal quality indicator output to the common analog to digital converter during signal quality monitoring for the purposes of antenna selection, and to feed the data output to the common analog to digital converter during data reception.

11. Bluetooth communication apparatus according to claim 8, 9 or 10 further comprising a second analog to digital converter for converting the radio frequency carrier signal to enable signal quality monitoring during data reception.

12. Bluetooth communication apparatus according to claim 11, wherein the common analog to digital converter is faster than the second analog to digital converter.

13. Bluetooth communication apparatus according to any of the preceding claims, further comprising means for maintaining a log of selected antenna and transmission frequency for the previous n data packets, where n > 1.

14. Bluetooth communication apparatus according to claim 13, wherein the value of n is less than the number of frequencies used by the apparatus.

15. Bluetooth communication apparatus according to claim 13 or 14, wherein the log is used to select an antenna in an auxiliary selection process for receiving a data packet.

16. Bluetooth communication apparatus according to claim 13, 14 or 15, wherein the log is used to select an antenna for data transmission.

17. Bluetooth communication apparatus according to claim 16, wherein the log additionally stores indications of the quality of received data, and the selection of an antenna for data transmission is based at least partially on the indications.

18. Bluetooth communication apparatus according to any preceding claim in which the control means is arranged to follow an auxiliary selection process under predetermined conditions.

19. Bluetooth communication apparatus according to claim 18 in which the control means is arranged to follow an auxiliary selection process to select an antenna for packet transmission.

20. Bluetooth communication apparatus according to claim 18 or claim 19 in which the control means holds a signal strength threshold, and is arranged such that if the signal strength seen by each of the antennas is below this threshold the results of an auxiliary selection process are used in the selection of the antenna for the current packet.

21. Bluetooth communication apparatus according to any one of claims 18 to 20 in which the auxiliary selection process comprises the step of selecting a default antenna.

22. Bluetooth communication apparatus according to any one of claims 18 to 21 in which the auxiliary selection process comprises the step of selecting the antenna used for one of: the previous packet, the previous packet received and the previous packet transmitted.

23. Bluetooth communication apparatus according to any one of claims 18 to 21 in which the auxiliary selection process comprises the steps of selecting an antenna which was not used for one of: the previous packet, the previous packet received and the previous packet transmitted.

24. Bluetooth communication apparatus according to any one of claims 18 to 23 in which the auxiliary selection process comprises the steps of monitoring the frequency of, and which antenna is used for, one of: each packet, each packet sent, and each packet received; storing the identity of the antenna used for the monitored packets in association with the frequency of the monitored packets in such a way as to provide a log indicating the identity of the antenna most recently monitored in use for a packet having each transmission frequency; and where the log contains an appropriate entry, selecting, for the present packet, the antenna shown by the log to have most recently been used by a packet having the same transmission frequency as the present packet.

25. Bluetooth communication apparatus according to any one of claims 18 to 23 in which the auxiliary selection process comprises the steps of monitoring the frequency of, and which antenna is used for, one of: each packet, each packet sent, and each packet received; storing the identity of the antenna used for the monitored packets in association with the frequency of the monitored packets in such a way as to provide a log having a predetermined maximum number of entries, which number is less than the number of different transmission frequencies used; and selecting, for the present packet, the antenna shown by the log to have been used by a packet having a transmission frequency which is closest to the transmission frequency of the present packet.

26. Bluetooth communication apparatus according to any of the preceding claims, in which the control means is arranged for selecting an antenna for transmission by using the same antenna as was used to receive the immediately preceding packet.

27. Bluetooth communication apparatus according to any of the preceding claims, in which the control means is arranged for selecting an antenna for transmission by using the same antenna as was used to receive the last packet received having the same transmission frequency.

28. A method of Bluetooth communication using apparatus comprising a plurality of antennas and comprising the steps of:
monitoring signal strength seen at each antenna; and
selecting one of the plurality of antennas for use in receiving or transmitting a respective data packet in dependence on the monitored signal strength.

29. A method according to claim 28 wherein the signal strength monitoring step comprises the step of monitoring the signal strength of the radio frequency carrier signal when no data packet is being carried.

30. A method according to claim 29 wherein the antenna for use in receiving a particular packet is selected on the basis of the signal strength seen at the antennas in the period immediately preceding the reception of that packet.

31. A method according to any one of claims 28 to 30 comprising the step of using a common analog to digital converter (ADC) for converting the radio frequency carrier signal during the signal strength monitoring step and for converting the data packet in the extraction of data.

32. A method according to any of claims 28 to 31, further comprising a step maintaining a log of selected antenna and transmission frequency for the previous n data packets, where the value of n is greater than 1 and less than the total number of transmission frequencies used by the apparatus.

33. A method according to claim 32, wherein the log is used to select an antenna in an auxiliary selection process.

34. A method according to claim 32 or 33, wherein the log is used to select an antenna for data transmission.

35. A computer program comprising code portions which when loaded and run on a computer cause the computer to execute a method according to any one of claims 28 to 34, or which when loaded and run on a computer provided in a device, cause the device to operate as an apparatus according to any one of claims 1 to 27.
